# EUROPEAN PATENT APPLICATION

(11) **EP 3 594 570 A1**
(43) Date of publication of application: **15.01.2020**
(21) Application number: 18763810.1
(22) Date of filing: 06.03.2018
(51) Int. Cl.: F22G 1/16, C10B 47/00, C10K 1/32

(54) **SUPERHEATED STEAM GENERATION DEVICE AND THERMAL DECOMPOSITION SYSTEM USING SAME**

(30) Priority: 07.03.2017 JP 2017042705
(71) Applicant: Jissen Kankyo Kenkyusho Co., Ltd., Nagoya-city, Aichi 453-0015 (JP)
(72) Inventor: MIZUNO Hisashi, Nagoya-city Aichi 453-0015 (JP)
(74) Representative: Adamson Jones
(86) International application number: PCT/JP2018/008514
(87) International publication number: WO 2018/164100

(57) **Abstract**

A superheated steam generating apparatus (12) is made of a material capable of generating heat upon energization. The superheated steam generating apparatus (12) comprises a superheated steam generating pipe (12) which includes a flow path (129) in which steam can flow and transfers the heat to the steam in the flow path (129) to generate superheated steam. In the superheated steam generating apparatus (12), a length of a cross-sectional shape of a wall forming the flow path (129) of the superheated steam generating pipe (12) is longer than a length of a circumference of an exact circle having a same sectional area as a sectional area of the flow path (129).

## Description

### [Cross Reference to Related Application]

This application is based on Japanese Patent Application No. 2017-042705, filed on March 7, 2017, which is incorporated by reference herein.

### [Technical Field]

The present disclosure relates to a superheated steam generating apparatus and a pyrolysis system using the same.

### [Background Art]

Conventionally, a biomass pyrolysis system which recovers combustible valuables constituted by a hydrocarbon compound generated by pyrolysis of biomass has been known. For example, Patent Reference 1 discloses a biomass pyrolysis system which can pyrolyze wood biomass using combustion heat of property stable fuel with stable property such as fossil fuel including coal, shale gas, petroleum and heavy oil, or blast furnace gas generated in a blast furnace, as a heat source.

### [References of Prior Arts]

### [Patent Reference]

### [Patent Reference 1]

Japanese Patent Application Publication No. 2014-205730

### [Summary of Invention]

However, in the biomass pyrolysis system disclosed in Patent Reference 1, pyrolysis is performed by indirectly transferring the combustion heat to the wood biomass, so that a relatively much heat is required to surely pyrolyze the wood biomass. Also, when the combustion heat of the property stable fuel is directly transferred to the wood biomass, since flue gas which includes the combustion heat includes oxygen, there is a risk of incomplete pyrolysis of the wood biomass.

The purpose of the present disclosure is to provide a superheated steam generating apparatus which can effectively generate superheated steam.

The present disclosure relates to a superheated steam generating apparatus which comprises a superheated steam generating pipe. The superheated steam generating pipe is made of a material capable of generating heat upon energization and includes a flow path in which steam can flow and transfers the heat to the steam in the flow path to generate superheated steam. The superheated steam generating apparatus of the present disclosure, a length of a cross-sectional shape of a wall forming the flow path of the superheated steam generating pipe is longer than a length of a circumference of an exact circle having a same sectional area as a sectional area of the flow path.

The superheated steam generating apparatus of the present disclosure includes the superheated steam generating pipe which generates superheated steam which is high-temperature steam made by further heating saturated steam to have a temperature of 100°C or more. The superheated steam generating pipe is formed such as to make the length of the cross-sectional shape of the wall forming the flow path longer than the length of the circumference of an exact circle having the same sectional area as the sectional area of the flow path. Because of this, an area in which the steam flowing in the flow path contacts to a wall of the superheated steam generating pipe becomes enlarged compared with a case where a cross-sectional shape of the flow path is an exact circle, so that the steam can be effectively turned into the superheated steam.

Also, the present disclosure relates to a pyrolysis system, which comprises a superheated steam supply portion and a pyrolysis portion.

The superheated steam supply portion includes a steam generating portion capable of generating steam and a superheated steam generating apparatus which turns steam generated by the steam generating portion into superheated steam, and can supply the superheated steam.

The pyrolysis portion heats hydrocarbon inclusion containing a hydrocarbon compound by superheated steam supplied by the superheated steam supply portion and can pyrolyze the hydrocarbon inclusion.

In the pyrolysis system of the present disclosure, superheated steam is supplied to the pyrolysis portion which can pyrolyze the hydrocarbon inclusion. The superheated steam has a relatively large heat capacity and an excellent heat-transfer property. Also, when the superheated steam is generated, dissolved oxygen included in the steam is rarefied due to volume expansion, so that an environment where the superheated steam exists is substantially in an oxygen-free condition. Because of this, when the superheated steam and the hydrocarbon inclusion are directly contacted in the pyrolysis portion, heat can be directly and effectively transferred to the hydrocarbon inclusion under an oxygen-free environment. As a result, the hydrocarbon inclusion can be effectively pyrolyzed.

### [Brief Description of Drawings]

The above purpose and the other purposes, characteristics or advantages regarding this disclosure can be more clearly disclosed by the following description of detailed technology with reference to attached drawings.
[Figure 1] Figure 1 is a schematic diagram of a pyrolysis system to which a superheated steam generating apparatus according to the first embodiment is applied.
[Figure 2A] Figure 2A is a cross-sectional view of a superheated steam generating pipe included by the superheated steam generating apparatus according to the first embodiment.
[Figure 2B] Figure 2B is a cross-sectional view taken along the line IIB-IIB of Figure 2A.
[Figure 3] Figure 3 is a cross-sectional view of a filter portion included by the pyrolysis system according to the first embodiment.
[Figure 4A] Figure 4A is a cross-sectional view of a superheated steam generating pipe included by a superheated steam generating apparatus according to the second embodiment.
[Figure 4B] Figure 4B is a cross-sectional view taken along the line IVB-IVB of Figure 4A.
[Figure 5] Figure 5 is a cross-sectional view of a filter portion included by a pyrolysis system according to the second embodiment.
[Figure 6A] Figure 6A is a cross-sectional view of a superheated steam generating pipe included by a superheated steam generating apparatus according to the third embodiment.
[Figure 6B] Figure 6B is a cross-sectional view taken along the line VIB-VIB of Figure 6A.

### [Description of Embodiments]

Hereinafter, a plurality of embodiments will be explained with reference to the drawings. Additionally, components which are substantially the same in the plurality of embodiments are given the same reference numeral, and an explanation thereof is omitted except when explained for the first time.

### (First Embodiment)

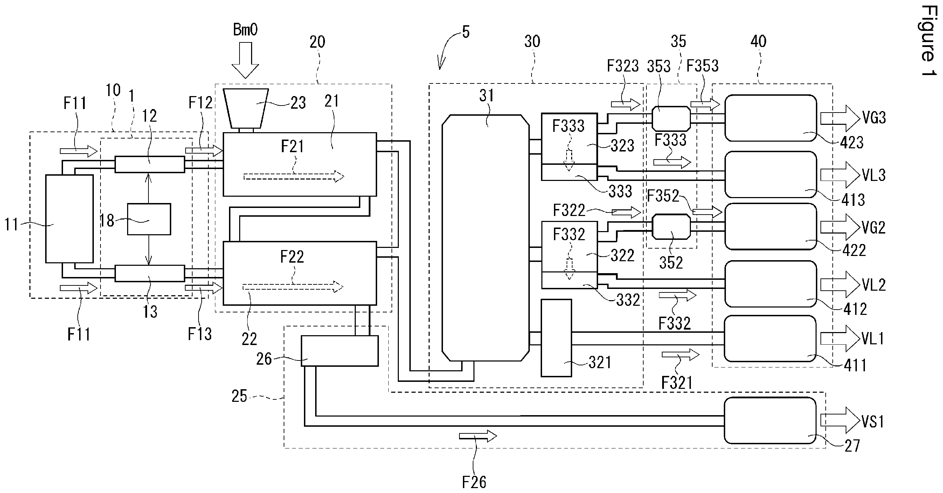

A superheated steam generating portion 1 as "a superheated steam generating apparatus" according to the first embodiment is applied to a biomass fuel manufacturing system 5 as "a pyrolysis system" shown in Figure 1. The biomass fuel manufacturing system 5 recovers fluid generated by heat treatment of biomass as biomass fuel which are combustible valuables VL1, VL2, VL3, VG2 and VG3, and recovers a solid remainder as a carbon valuable VS1. Here, as the biomass, for example, botanical resources such as Jatropha (*Jatropha curcas*), cottonseed, soybean, safflower, rapeseed, common flax, castor oil plant, Japanese wax tree, olive, sesame, camellia, peanut, African oil palm, oil palm, coconut palm, coffee and sunflower, animal resources such as fish, jellyfish, and so on, and waste including hydrocarbon compounds such as vegetable waste, plastic waste and household waste are listed.

The biomass fuel manufacturing system 5 comprises a superheated steam supply portion 10, a pyrolysis portion 20, a carbide collecting portion 25 as "a solid collecting portion," a separating portion 30, a purification portion 35 and a retaining portion 40.

The superheated steam supply portion 10 includes a boiler 11 as "a steam generating portion" and the superheated steam generating portion 1.

The boiler 11 is a combustion boiler using LNG as fuel and is provided to be capable of generating steam. The steam generated by the boiler 11 is sent to superheated steam generating pipes 12, 13 (a while arrow F11 in Figure 1).

The superheated steam generating portion 1 includes the superheated steam generating pipes 12, 13 and a power control portion 18.

The superheated steam generating pipes 12, 13 turn the steam sent from the boiler 11 into superheated steam. In the biomass fuel manufacturing system 5, since biomass is heat-treated in two different temperature regions, two superheated steam generating pipes 12, 13 are provided such that superheated steam having two different temperatures can be generated.

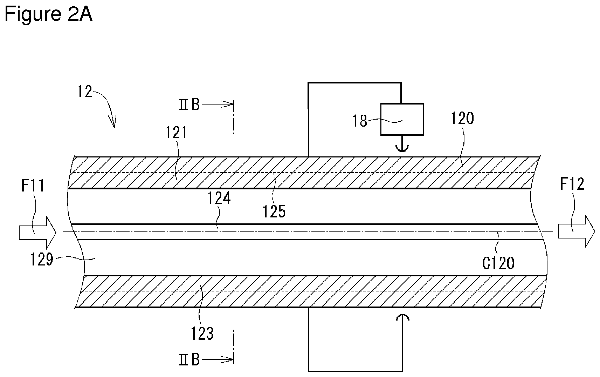

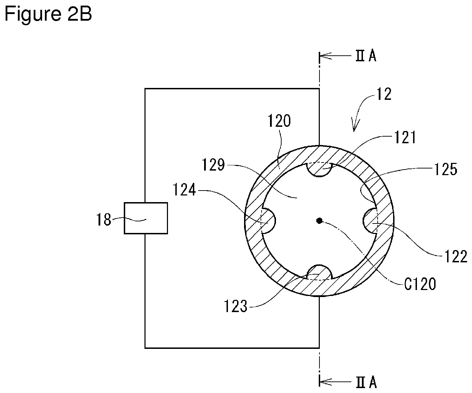

A detailed configuration of the superheated steam generating pipes 12, 13 will be explained with reference to Figures 2A and 2B. Figure 2A is a cross-sectional view of the superheated steam generating pipe 12 in a steam flow direction (a direction shown by white arrows F11 and F12 of Figure 2A), and Figure 2B is a cross-sectional view of the superheated steam generating pipe 12 in a direction orthogonal to the steam flow direction. While the configuration of the superheated generating pipe 12 is explained here, the superheated steam generating pipe 13 has the same configuration.

The superheated steam generating pipe 12 includes a cylinder portion 120 and four protrusions 121, 122, 123 and 124. The cylinder portion 120 and the protrusions 121, 122, 123 and 124 are integrally made of 70% nickel and 25% chrome-based metal which is a material capable of generating heat upon energization, for example, INCONEL (registered trademark) or HASTELLOY (registered trademark).

As shown in Figure 2B, the cylinder portion 120 is formed such that a cross-sectional shape orthogonal to the steam flow direction is annular. The cylinder portion 120 is electrically connected to the power control portion 18.

The protrusions 121, 122, 123 and 124 are provided at the inner wall surface 125 of the cylinder portion 120. The protrusions 121, 122, 123 and 124 are formed to protrude in a radially inner direction of the cylinder portion 120 from the inner wall surface 125. In the first embodiment, each of the protrusions 121, 122, 123 and 124 is provided with even intervals at 90° seen from a center axis C120 of the cylinder portion 120.

The cylinder portion 120 and the protrusions 121, 122, 123 and 124 form a flow path 129 in which steam sent from the boiler 11 flows. The cylinder portion 120 and the protrusions 121, 122, 123 and 124 are formed such that a length of a cross-sectional shape of a wall forming the flow path 129 of the cylinder portion 120 and the protrusions 121, 122, 123 and 124 is longer than a length of a circumference of an exact circle having the same sectional area as a sectional area of the flow path 129.

The power control portion 18 is provided such that electric power to be supplied to the cylinder portion 120 and the protrusions 121, 122, 123 and 124 can be controlled. When the power control portion 18 supplies the electric power, the cylinder portion 120 and the protrusions 121, 122, 123 and 124 generate heat. The heat generated at the cylinder portion 120 and the protrusions 121, 122, 123 and 124 is transferred to the steam flowing in the flow path 129, whereby superheated steam is generated.

The power control portion 18 controls to make a ratio of an electric current flowing in the cylinder portion 120 and the protrusions 121, 122, 123 and 124 to a voltage to be applied to the cylinder portion 120 and the protrusions 121, 122, 123 and 124 relatively larger. More specifically, while the voltage applied to the cylinder portion 120 and the protrusions 121, 122, 123 and 124 is set to be approximately one-fourth to one-tenth a voltage of electric power supplied from the outside, the electric current flowing in the cylinder portion 120 and the protrusions 121, 122, 123 and 124 is made larger by four times to ten times. For example, when a rated voltage of the electric power supplied from the outside is 220V, while the voltage applied to the cylinder portion 120 and the protrusions 121, 122, 123 and 124 is set to be approximately 40V, the electric current flowing in the cylinder portion 120 and the protrusions 121, 122, 123 and 124 is made larger without changing the electric power.

The pyrolysis portion 20 includes a first heat-treating furnace 21, a second heat-treating furnace 22 and a biomass inlet 23. The pyrolysis portion 20 can pyrolyzes by heating biomass.

The first heat-treating furnace 21 is connected to the superheated steam generating pipe 12 and the biomass inlet 23. The first heat-treating furnace 21 is a continuous heat-treating furnace having a single screw in its inner portion, which can transfer biomass Bm0 in a direction shown by a white arrow F21 in Figure 1 while stirring the biomass Bm0. In the first heat-treating furnace 21, by superheated steam sent as shown in a white arrow F12 in Figure 1 from the superheated steam generating pipe 12, the biomass is dried and pyrolyzed at a range of 250°C to 350°C, for example. Pyrolyzed gas generated by the pyrolysis in the first heat-treating furnace 21 is sent to the separating portion 30. A solid generated by the pyrolysis in the first heat-treating furnace 21 is sent to the second heat-treating furnace 22.

The second heat-treating furnace 22 is provided at a position which can receive the solid discharged from the first heat-treating furnace 21. The second heat-treating furnace 22 is a continuous heat-treating furnace, having a single screw in its inner portion, which can transfer the solid sent from the first heat-treating furnace 21 in a direction shown by a white arrow F22 in Figure 1 while stirring the solid. In the second heat-treating furnace 22, by superheated steam sent as shown in a white arrow F13 in Figure 1 from the superheated steam generating pipe 13, the solid sent from the first heat-treating furnace 21 is pyrolyzed at a range of 400°C to 700°C, for example. Pyrolyzed gas generated by the pyrolysis in the second heat-treating furnace 22 is sent to the separating portion 30. A solid generated by the pyrolysis in the second heat-treating furnace 22 is sent to the carbide collecting portion 25.

The biomass inlet 23 is provided above the first heat-treating furnace 21 in the direction of gravity. The biomass inlet 23 includes two sliding doors (not shown) which can ensure air tightness of the first heat-treating furnace 21 during heat treatment.

The carbide collecting portion 25 includes a cooling portion 26 and a carbide retaining portion 27.

The cooling portion 26 is provided at a position which can receive the solid discharged from the second heat-treating furnace 22. The cooling portion 26 is, for example, a water cooling apparatus which cools the solid sent from the second heat-treating furnace 22. The solid cooled in the cooling portion 26 is sent to the carbide retaining portion 27.

The carbide retaining portion 27 retains the cooled solid sent from the cooling portion 26 along a white arrow F26 in Figure 1. The solid retained in the carbide retaining portion 27 is carbide whose major component is carbon and can be used as a carbon valuable VS1.

The separating portion 30 includes a fractionating column 31, coolers 321, 322 and 323 and separators 332 and 333.

The fractionating column 31 is formed to be a hollow cylinder, and a plurality of meshes is provided in its inner portion. The pyrolyzed gas sent from the first heat-treating furnace 21 and the second heat-treating furnace 22 is introduced to an inner portion of the fractionating column 31 from a bottom side of the fractionating column 31 in the direction of gravity. In the fractionating column 31, in accordance with the number or the position of the meshes, a fractionating timing or the degree of cooling of the pyrolyzed gas flowing in the inner portion of the fractionating column 31 from the bottom side to a top side in the direction of gravity can be set. The fractionated gas in the fractionating column 31 is sent to the coolers 321, 322 and 323.

The coolers 321, 322 and 323 are a capacitor, for example, which cool the fractionated gas in the fractionating column 31.

The cooler 321 is provided adjacent to an end at the bottom side of the fractionating column 31 in the direction of gravity. In the cooler 321, high boiling fluid with a relatively high boiling point firstly separated from the pyrolyzed gas at the end at the bottom side of the fractionating column 31 is cooled.

The cooler 322 is provided in a top direction of the cooler 321 in the fractionating column 31 in the direction of gravity. In the cooler 322, medium boiling fluid with a medium boiling point separated from the pyrolyzed gas from which the high-boiling fluid is separated is cooled.

The cooler 323 is provided adjacent to an end at the top side of the fractionating column 31 in the direction of gravity. In the cooler 323, low boiling fluid with a relatively low boiling point which is the pyrolyzed gas from which the high boiling fluid and the medium boiling fluid are separated is cooled.

In each of the coolers 322 and 323, the medium boiling fluid or the low boiling fluid separated in the fractionating column 31 is cooled, thereby generating combustible gas as a gas component and a mixture of oil and water as liquid components. The combustible gas generated in the coolers 322 and 323 is sent to the purification portion 35 (white arrows F322 and F323 in Figure 1.) The mixture of oil and water generated in the coolers 322 and 323 is sent to the separators 332, 333 (white arrows F332, F333 in Figure 1.)

The purification portion 35 includes two filter portions 352, 353. Each of two filter portions 352, 353 is provided to be connected to the coolers 322, 323. Each of the filter portions 352, 353 includes a filter casing and a filter.

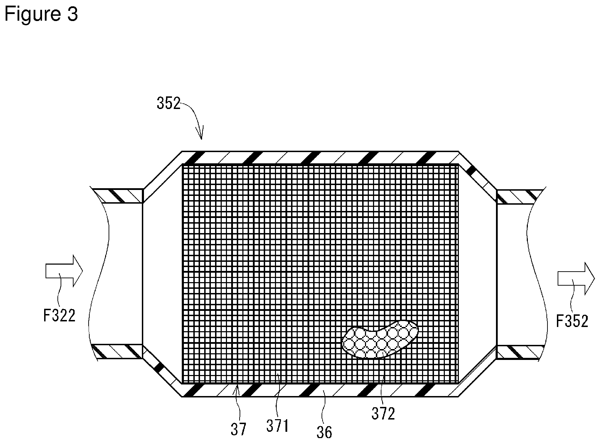

Figure 3 shows a detailed configuration of the filter portion 352. The filter portion 352 includes a filter casing 36 and a filter 37. While the configuration of the filter portion 352 is explained here, the filter portion 353 has the same configuration too.

The filter casing 36 is formed to be substantially cylindrical to be capable of housing the filter 37.

The filter 37 is provided in the filter casing 36 to prevent a flow of the combustible gas flowing in a direction shown by a white arrow F322 in Figure 3. The filter 37 houses granular activated carbons 372 in an inner portion of a mesh 371 which makes an outline of the filter 37.

The activated carbon 372 is made of Jatropha seed remainder, which has a pore diameter in a range of 0.5 to 1.0 nm and a peak of 0.6 nm in a differential pore size distribution. The activated carbon 372 has a property that the difference between the mass of water absorbed by activated carbon per 1 gram at a relative steam pressure of 0.05 and the mass of water absorbed by the activated carbon per 1 gram at a relative steam pressure of 0.45 is 130 mg or more, and the difference between the mass of water absorbed by the activated carbon per 1 gram at a relative pressure of 0.25 and the mass of water absorbed by the activated carbon per 1 gram at a relative pressure of 0.45 is 101.4 mg or more. Also, the activated carbon 372 has a property that a steam adsorption isotherm at a relative steam pressure of 0.05 to 0.45 forms a curvature which is curved downward.

The activated carbon 372 absorbs environmental pollution gas included in the combustible gas generated in the cooler 322, for example, sulfur compound gas or nitrogen oxide gas and eliminates them. The activated carbon included in the filter portion 353 absorbs environmental pollution gas included in the combustible gas generated in the cooler 323 and eliminates them.

The separators 332, 333 separate the mixture of oil and water generated in each of the coolers 322, 323 into oil and water. The separators 332, 333 have the configuration that an oily water tank retaining the mixture of oil and water is integrally formed. In the separators 332, 333, the oil is separated from the water by separating the mixture of oil and water into an upper oil layer and a lower water layer due to the difference in specific gravity.

The retaining portion 40 includes three oil retaining tanks 411, 412 and 413 and two gas retaining tanks 422 and 423.

The oil retaining tank 411 is connected to the cooler 321. The oil retaining tank 411 retains combustible liquid with a relatively high boiling point sent from the cooler 321 along a white arrow F321 in Figure 1 as the combustible valuable VL1. The combustible valuable VL1 retained in the oil retaining tank 411 can be used outside the system.

The oil retaining tank 412 is connected to the separator 332. The oil retaining tank 412 retains combustible liquid with a medium boiling point sent from the separator 332 along the white arrow F332 in Figure 1 as the combustible valuable VL2. The combustible valuable VL2 retained in the oil retaining tank 412 can be used outside the system.

The oil retaining tank 413 is connected to the separator 333. The oil retaining tank 413 retains combustible liquid with a relatively low boiling point sent from the separator 333 along the white arrow F333 in Figure 1 as the combustible valuable VL3. The combustible valuable VL3 retained in the oil retaining tank 413 can be used outside the system.

The gas retaining tank 422 is connected to the filter portion 352. The gas retaining tank 422 retains combustible gas sent from the filter portion 352 along a white arrow F352 in Figure 1. The combustible gas retained in the gas retaining tank 422 can be used outside the system as the combustible valuable VG2.

The gas retaining tank 423 is connected to the filter portion 353. The gas retaining tank 423 retains combustible gas sent from the filter portion 353 along a white arrow F353 in Figure 1. The combustible gas retained in the gas retaining tank 423 can be used outside the system as a combustible valuable VG3.

Next, a method of manufacturing biomass fuel in the biomass fuel manufacturing system 5 will be explained.

Firstly, by a belt conveyer or a bucket conveyer, or a excavator or by hands, biomass is inserted into the first heat-treating furnace 21 via the biomass inlet 23.

The biomass inserted into the first heat-treating furnace 21 is subjected to primary heating by superheated steam sent from the superheated steam generating pipe 12. Because of this, oil having a relatively low boiling point included in the biomass is evaporated and water also evaporates, so that drying is performed. In other words, heat treatment in the first heat-treating furnace 21 performs both evaporation of a low-boiling component and drying of the biomass.

The biomass subjected to the primary heating in the first heat-treating furnace 21 is transferred to the second heat-treating furnace 22. In the second heat-treating furnace 22, the biomass is subjected to secondary heating by superheated steam sent from the superheated steam generating pipe 13. Because of this, almost all components which have not evaporated in the first heat-treating furnace 21 can be evaporated, and at the same time, the biomass is carbonized. In other words, heat treatment in the second heat-treating furnace 22 performs both evaporation of a component with a middle boiling point or more and carbonization of the biomass. When the temperature of the second heat-treating furnace 22 is raised as possible as it can be, the carbonized biomass can be activated to some extent.

The carbide derived from the biomass carbonized in the second heat-treating furnace 22 is sent to the cooling portion 26. After cooling for a predetermined time in the cooling portion 26, the carbide is sent to the carbide retaining portion 27. The carbide retained in the carbide retaining portion 27 is reused as absorbent, a catalyst and a molecular sieve etc.

The pyrolyzed gas generated in the first heat-treating furnace 21 and the second heat-treating furnace 22 is sent to the fractionating column 31 together with superheated steam for heating. The mixture gas of the pyrolyzed gas and the superheated steam sent to the fractionating gas 31 is gradually cooled passing through the plurality of meshes during flowing from the bottom side to the top side in the direction of gravity. Because of this, the mixture gas of the pyrolyzed gas and the superheated steam is fractionated into a plural kinds of fluid with different boiling points. The plural kinds of fractionated fluid are respectively retained in different retaining tanks.

For example, when gas at a temperature of approximate 350°C to 400°C is introduced to the fractionating column 31 from the first heat-treating furnace 21 and the second heat-treating furnace 22, firstly, at the end at the bottom side of the fractionating column 31, oil corresponding to heavy oil with a relatively high boiling point is separated from the mixture gas of the pyrolyzed gas and the superheated steam. The separated oil is retained in the oil retaining tank 411.

When the mixture gas of the pyrolyzed gas and the superheated steam passing through the end at the bottom side of the fractionating column 31 moves upward in the fractionating column 31 to be cooled to approximately 300°C, at a substantial center portion of the fractionating column 31, gas with a middle boiling point is separated. The gas with a middle boiling point is separated into combustible gas, oil corresponding to light oil and water by the cooler 322 and the separator 332. The separated combustible gas is retained in the gas retaining tank 422 and the separated oil is retained in the oil retaining tank 412.

The mixture gas of the pyrolyzed gas and the superheated steam passing through the substantial center portion of the fractionating column 31 is separated into combustible gas, oil corresponding to gasoline and water by the cooler 323 and the separator 333. The separated combustible gas is retained in the gas retaining tank 423, and the separated oil is retained in the oil retaining tank 413.

The superheated steam generating portion 1 according to the first embodiment includes the superheated steam generating pipes 12, 13 which can generate superheated steam. A length of a cross-sectional shape of a wall forming a flow path of the superheated steam generating pipes 12, 13 is longer than the length of the circumference of an exact circle having the same sectional area as that of the flow path. Because of this, an area in which the steam flowing in the flow path contacts to the cylinder portion and the protrusions is enlarged compared with a case where the cross-sectional shape of the flow path is an exact circle, so that the superheated steam generating pipes 12, 13 can effectively transfer heat generated by energization to the steam. Consequently, in the first embodiment, superheated steam in a desired state can be generated with a relatively small energy.

Also, the superheated steam generating pipes 12, 13 include a plurality of protrusions at an inner wall of the cylinder portion. Because of this, the area in which the steam flowing in the flow path contacts to the cylinder portion and the protrusions is further enlarged compared with a case where the cross-sectional shape of the flow path is an exact circle. Consequently, the superheated steam generating pipes 12, 13 can generate the superheated steam in the desired state with a further smaller energy.

Also, the power control portion 18 which supplies the electric power to the superheated steam generating pipes 12, 13 controls to make the ratio of the electric current flowing in the cylinder portion and the protrusions to the voltage to be applied to the cylinder portion and the protrusions larger. Because of this, compared to the same electric power, a calorific value at the cylinder portion and the protrusions can be made larger. Consequently, the superheated steam generating pipes 12, 13 can generate the superheated steam in the desired state with a further smaller energy.

In the biomass fuel manufacturing system 5 according to the first embodiment, superheated steam with a relatively large heat capacity and an excellent heat-transfer property is supplied to the pyrolysis portion 20 as a heat source of pyrolysis of the biomass. When the superheated steam is generated in the superheated steam generating pipes 12, 13, dissolved oxygen included in the steam is rarefied due to volume expansion, so that the environment where the superheated steam exists is substantially the oxygen-free condition. Because of this, when the superheated steam and the biomass are directly contacted in the pyrolysis portion 20, heat can be directly transferred to the biomass under the oxygen-free environment. As a result, in the first embodiment, the biomass can be effectively pyrolyzed.

Also, in the biomass fuel manufacturing system 5, the activated carbon 372 with a material of Jatropha seed remainder is provided at the purification portion 35. Since the activated carbon 372 with the material of Jatropha seed remainder has the above-described property, it absorbs the environmental pollution gas included in the combustible gas generated in the separators 332, 333 and eliminates them. This prevents discharge of the environmental pollution gas to the outside of the system in the pyrolysis of the biomass.

### (Second Embodiment)

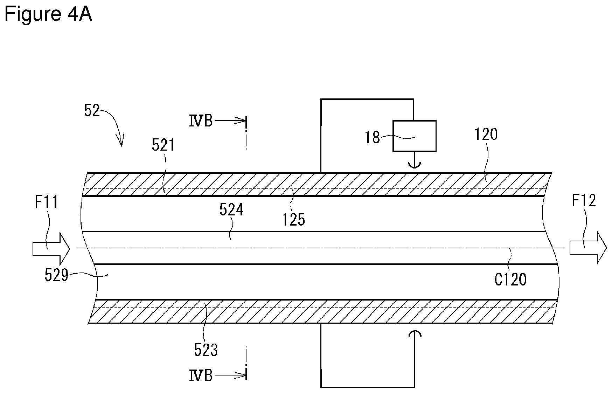

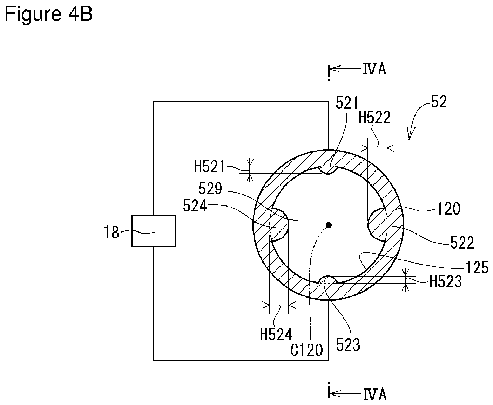

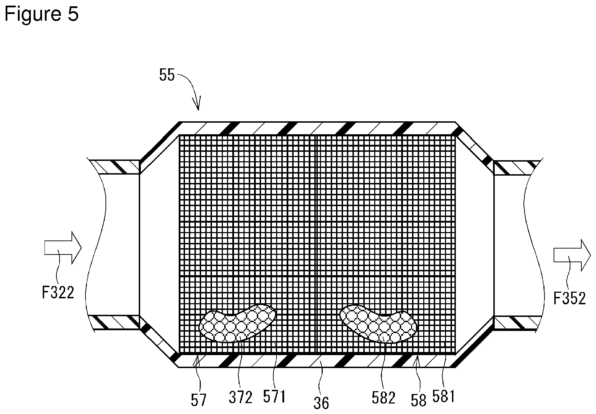

A superheated steam generating apparatus according to the second embodiment will be explained with reference to Figures 4A, 4B and 5. In the second embodiment, the shape of the superheated steam generating pipe is different from that in the first embodiment.

The superheated steam generating portion according to the second embodiment is applied to the biomass fuel manufacturing system comprising the pyrolysis portion 20, the carbide collecting portion 25, the separating portion 30, a purification portion 55 and the retaining portion 40.

Figures 4A, 4B show a cross-sectional view of a superheated steam generating pipe 52 included by the superheated steam generating portion according to the second embodiment.

The superheated steam generating pipe 52 includes the cylinder potion 120 and four protrusions 521, 522, 523 and 524. The cylinder portion 120 and the protrusions 521, 522, 523 and 524 are integrally made of a material such as Inconel (registered trademark) or HASTELLOY (registered trademark).

The protrusions 521, 522, 523 and 524 are formed to protrude in the radially inner direction of the cylinder portion 120 from the inner wall surface 125 of the cylinder portion 120. The protrusions 521, 522, 523 and 524 are provided with even intervals at 90° seen from the center axis C120 of the cylinder portion 120.

In the superheated steam generating pipe 52, radial heights of the protrusions 521, 522, 523 and 524 are different. More specifically, as shown in Figure 4B, when the heights of the protrusions 521, 522, 523 and 524 from the corresponding inner wall surface 125 are compared, respective heights H522, H524 of the protrusions 522, 524 are higher than respective heights H521, H523 of the protrusions 521, 523.

The cylinder portion 120 and the protrusions 521, 522, 523 and 524 form a flow path 529 through which steam sent from the boiler 11 flows. The cylinder portion 120 and the protrusions 521, 522, 523 and 524 are formed such that a length of a cross-sectional shape of a wall forming the flow path 529 of the cylinder portion 120 and the protrusions 521, 522, 523 and 524 is longer than a length of a circumference of an exact circle having the same sectional area as a sectional area of the flow path 529.

The power control portion 18 is provided such that electric power to be supplied to the cylinder portion 120 and the protrusions 521, 522, 523 and 524 can be controlled. When the power control portion 18 supplies the electric power to the cylinder portion 120 and the protrusions 521, 522, 523 and 524, the cylinder portion 120 and the protrusions 521, 522, 523 and 524 generate heat, and the generated heat is transferred to the steam flowing in the flow path 529, whereby superheated steam is generated.

The purification portion 55 includes two filter portions. Each of two filter portions is provided to be connected to the coolers 322, 323. Each of two filter portions includes a filter casing and a filter.

Figure 5 shows a detailed configuration of the filter portions included in the purification portion 55. Each filter portion included in the purification portion 55 includes the filter casing 36, a first filter 57 and a second filter 58. The filter casing 36 houses the first filter 57 and the second filter 58.

The first filter 57 is formed to be columnar and provided at an upstream side in the filter casing 36, that is, a side of the cooler 322 or 323, to prevent a flow of fluid flowing in a direction shown by a white arrow F322 in Figure 5. The first filter 57 houses the granular activated carbon 372 in an inner portion of a mesh 571 which makes an outline of the first filter 57.

The second filter 58 is formed to be columnar and provided at a downstream side in the filter casing 36, that is, a side of the gas retaining tank 422 or 423, to prevent a flow of the fluid flowing in the filter casing 36. The second filter 58 houses granular apatite 582 in an inner portion of a mesh 581 which makes an outline of the second filter 58.

Here, a manufacturing method and property of the apatite 582 will be explained.

The apatite 582 is hydroxyapatite and has hydroxyl groups. The apatite 582 is formed by a known method, for example, formed by reacting calcium ions and phosphate ions in a neutral or alkaline aqueous solution at room temperature. In the second embodiment, in the second filter 58, the mesh 581 has an inner portion filled with the granular apatite 582 with the diameter of 2.5 mm. However, the diameter of the apatite 582 is not limited to this.

The apatite 582 eliminates acid fume which is steam representing acidity included in the fluid sent from the separators 332, 333.

In the superheated steam generating pipe 52 included in the superheated steam generating potion according to the second embodiment, the radial heights of the protrusions 521, 522, 523 and 524 are different. Because of this, a flow of the steam passing through the flow path 529 tends to be disturbed, so that a contact time of the cylinder portion 120 and the protrusions 521, 522, 523 and 524 with the steam is made longer. As a result, in the second embodiment, an effect of the first embodiment can be provided, and at the same time, a desired superheated steam can be generated with a further smaller energy.

Also, in the biomass fuel manufacturing system to which the superheated steam generating portion according to the second embodiment is applied, in the purification portion 55, the first filter 57 including the activated carbon 372 and the second filter 58 including the apatite 582 are provided. Because of this, the purification portion 55 can eliminate the acid fume included in the fluid sent from the separators 332, 333 in addition to the sulfur compound gas or the nitrogen oxide gas. This surely prevents the discharge of the environmental pollution gas to the outside of the system in the pyrolysis of the biomass.

### (Third Embodiment)

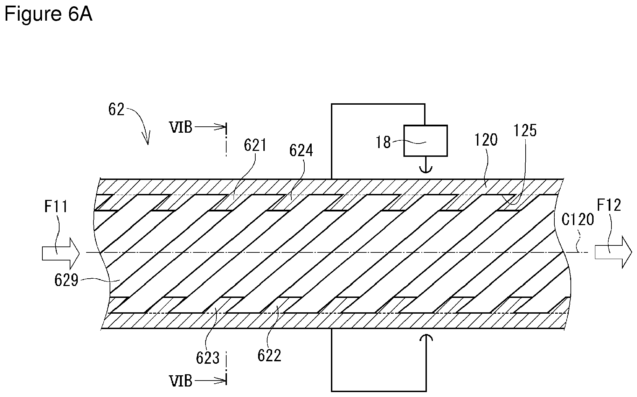

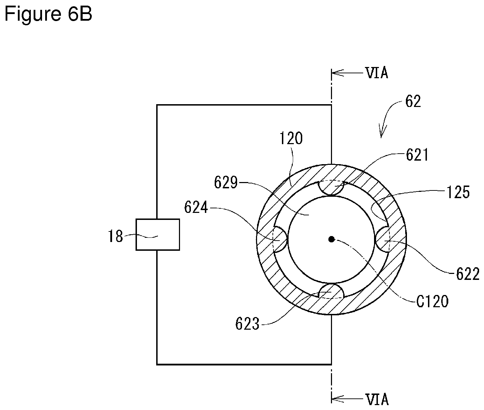

A superheated steam generating apparatus according to the third embodiment will be explained with reference to Figures 6A and 6B. In the third embodiment, the shape of the superheated steam generating pipe is different from that in the first embodiment.

The superheated steam generating portion according to the third embodiment is applied to the biomass fuel manufacturing system comprising the pyrolysis portion 20, the carbide collecting portion 25, the separating portion 30, the purification portion 35 and the retaining portion 40.

Figures 6A, 6B show a cross-sectional view of a superheated steam generating pipe 62 included in the superheated steam generating portion according to the third embodiment.

The superheated steam generating pipe 62 includes the cylinder potion 120 and four protrusions 621, 622, 623 and 624. The cylinder portion 120 and the protrusions 621, 622, 623 and 624 are integrally made of a material such as Inconel (registered trademark) or HASTELLOY (registered trademark).

The protrusions 621, 622, 623 and 624 are formed to protrude in the radially inner direction of the cylinder portion 120 from the inner wall surface 125 of the cylinder portion 120. The protrusions 621, 622, 623 and 624 are provided with even intervals at 90° seen from the center axis C120 of the cylinder portion 120.

In the superheated steam generating pipe 62, the protruding portions 621, 622, 623 and 624 are spirally formed on the inner wall surface 125.

The cylinder portion 120 and the protrusions 621, 622, 623 and 624 form a flow path 629 through which steam sent from the boiler 11 flows. The cylinder portion 120 and the protrusions 621, 622, 623 and 624 are formed such that a length of a cross-sectional shape of a wall forming the flow path 629 of the cylinder portion 120 and the protrusions 621, 622, 623 and 624 is longer than a length of a circumference of an exact circle having the same sectional area as a sectional area of the flow path 629.

The power control portion 18 is provided such that electric power to be supplied to the cylinder portion 120 and the protrusions 621, 622, 623 and 624 can be controlled. When the power control portion 18 supplies the electric power to the cylinder portion 120 and the protrusions 621, 622, 623 and 624, the cylinder portion 120 and the protrusions 621, 622, 623 and 624 generate heat, and the generated heat is transferred to the steam flowing in the flow path 629, whereby superheated steam is generated.

In the superheated steam generating pipe 62 included in the superheated steam generating potion according to the third embodiment, the protrusions 621, 622, 623 and 624 are spirally formed on the inner wall surface 125. Because of this, a flow of the steam passing through the flow path 629 tends to be disturbed, so that a contact time of the cylinder portion 120 and the protrusions 621, 622, 623 and 624 with the steam is made longer. As a result, in the third embodiment, the same effect as in the second embodiment can be provided.

### (Other Embodiments)

In the above embodiments, the superheated steam generating pipe is formed by the cylinder portion and the protrusions which protrude in the radially inner direction. However, the configuration of the superheated steam generating pipe is not limited to this. Any configuration may be applied as far as the length of the cross-sectional shape of the wall forming the flow path of the superheated steam generating pipe is longer than the length of the circumference of an exact circle having the same sectional area as the sectional area of the flow path.

In the above embodiments, the cylinder portion of the superheated steam generating pipe is formed such that the cross-sectional shape orthogonal to the steam flow direction is annular. However, the cross-sectional shape of the cylinder portion is not limited to this.

In the above embodiments, four protrusions are provided in the superheated steam generating pipe. However, the number of protrusions is not limited to this. Also, in the first and second embodiments, the protrusions are provided with even intervals at 90°. However, an arrangement of the protrusions is not limited to this.

In the above embodiments, the power control portion included by the superheated steam generating portion controls to make the ratio of the electric current flowing in the cylinder portion and the protrusions to the voltage to be applied to the cylinder portion and the protrusions relatively larger. However, the content of controlling by the power control portion is not limited to this.

In the above embodiments, the cylinder portion and the protrusions of the superheated steam generating pipe are integrally made of 70% nickel and 25% chrome-based metal. However, the material forming the cylinder portion and the protrusions is not limited to this. Any material may be applied as far as it is a material capable of generating heat when the electric current flows.

In the above embodiments, the superheated steam generating pipe may not only be formed as linear, but also as a curve, as shown in Figures 2A, 4A and 6A.

In the above embodiments, the pyrolysis portion includes two heat-treating furnaces. However, the number of heat-treating furnaces is not limited to this.

In the above embodiments, the first heat-treating furnace and the second heat-treating furnace are the continuous heat-treating furnace which can transfer the biomass in one direction while stirring the biomass. Because of this, the biomass can be evenly and continuously treated, and productivity is improved. However, the first heat-treating furnace and the second heat-treating furnace are not limited to this. They may be batch-type heat-treating furnaces.

In the above embodiments, the first heat-treating furnace and the second heat-treating furnace respectively have a single screw in its inner portion. However, a form in which a two-axis screw feeder is arranged in an axial direction may be applied, and a rotary kiln form may be applied too.

In the above embodiments, "the steam generating portion" is the combustion boiler using LNG as fuel, from a viewpoint of energy costs and an environment etc. However, a combustion boiler using fuel other than LNG as fuel or an electric boiler may be applied, and any apparatus may be applied as far as it can generate steam.

In the above embodiments, the filter of the purification portion includes the activated carbon with a material of Jatropha seed remainder or a combination of the activated carbon with the material of Jatropha seed remainder and the apatite. However, the kind of the filter is not limited to this.

In the above embodiments, the fractionating column performs fractionation in three stages. However, the number of stages of fractionation is not limited to this. The fractionation may be performed in one stage for separation into one kind of combustible gas and one kind of oil.

In the above embodiments, of the pyrolyzed gas fractioned in the fractionating column, the high-boiling fluid separated at the end at the bottom side of the fractionating column is retained in the oil retaining tank, only via the cooler. However, the configuration including the fractionating column and the retaining tank is not limited to this.

The present disclosure is not limited to the above embodiments and can be implemented in various forms without apart the gist of the disclosure.

The present disclosure is described complying with the embodiments. However, the present disclosure is not limited to these embodiments and their configurations. The present disclosure also includes various modified examples and modifications within its equivalent range. Moreover, various combinations and forms, and further, other combinations and forms which add only one or more element to the various combinations and forms are included in the scope of the present disclosure or a concept range thereof.

## Claims

1. A superheated steam generating apparatus comprising:
a superheated steam generating pipe (12, 13, 52, 62), which is made of a material capable of generating heat upon energization, which includes a flow path (129, 529, 629) in which steam can flow and transfers the heat to the steam in the flow path to generate superheated steam,
wherein a length of a cross-sectional shape of a wall forming the flow path of the superheated steam generating pipe is longer than a length of a circumference of an exact circle having a same sectional area as a sectional area of the flow path.

2. The superheated steam generating apparatus according to claim 1, wherein the superheated steam generating pipe includes a cylinder portion (120) which is cylindrically formed and which makes an outline of the flow path and one or more protrusions (121, 122, 123, 124, 521, 522, 523, 524, 621, 622, 623, 624) which protrudes in a radially inner direction from an inner wall surface (125) of the cylinder portion.

3. The superheated steam generating apparatus according to claim 2, wherein a plurality of protrusions is provided.

4. The superheated steam generating apparatus according to claim 3, wherein each of the protrusions has different radial heights.

5. The superheated steam generating apparatus according to any one of claims 2 to 4, wherein the protrusion is spirally formed on the inner wall surface.

6. The superheated steam generating apparatus according to any one of claims 1 to 5, further comprising a power control portion (18) which can control an electric power for energization of the superheated steam generating pipe,
wherein the power control portion controls to make a ratio of an electric current flowing in the superheated steam generating pipe to a voltage to be applied to the superheated steam generating pipe larger.

7. A pyrolysis system comprising:
a superheated steam supply portion (10) which includes a steam generating portion (11) capable of generating steam and a superheated steam generating apparatus (12, 13, 18, 52, 62) according to any one of claims 1 to 6 which turns steam generated by the steam generating portion into superheated steam, and which can supply the superheated steam; and
a pyrolysis portion (20) capable of heating hydrocarbon inclusion containing a hydrocarbon compound by superheated steam supplied by the superheated steam supply portion to pyrolyze the hydrocarbon inclusion.

8. The pyrolysis system according to claim 7, further comprising a separating portion (30) which separates gas generated in the pyrolysis portion into a plural kinds of combustible valuables (VL1, VL2, VL3, VG2, VG3).

9. The pyrolysis system according to claim 8, further comprising a purification portion (35, 55) which eliminates impurity included at least one of the plural kinds of combustible variables separated in the separating portion from the combustible valuables to purify the combustible valuables.

10. The pyrolysis system according to claim 9, wherein the purification portion includes an activated carbon (372) with a material of Jatropha seed remainder.

11. The pyrolysis system according to claim 9, wherein the purification portion includes an activated carbon (372) with a material of Jatropha seed remainder and an apatite (582).

12. The pyrolysis system according to any one of claims 7 to 11, further comprising a solid collecting portion (25) which collects a solid generated in the pyrolysis portion as a carbon valuable (VS1).
